# EUROPÄISCHE PATENTSCHRIFT

(11) **EP 4 058 667 B1**
(45) Veröffentlichungstag und Bekanntmachung des Hinweises auf die Patenterteilung: **26.06.2024**
(21) Anmeldenummer: 20800093.5
(22) Anmeldetag: 29.10.2020
(51) Int. Cl.: F02K 9/40, F02K 9/46, H01M 8/18

(54) **TRIEBWERKANORDNUNG UND VERFAHREN ZUM BETREIBEN EINER TRIEBWERKANORDNUNG MIT DURCHFLUSSBATTERIEANORDNUNG**
ENGINE ASSEMBLY AND METHOD FOR OPERATING AN ENGINE ASSEMBLY WITH FLOW BATTERY ASSEMBLY
ENSEMBLE MOTEUR ET PROCÉDÉ DE FONCTIONNEMENT D'UN ENSEMBLE MOTEUR AVEC ENSEMBLE BATTERIE À CIRCULATION

(30) Priorität: 14.11.2019 DE 102019130787
(43) Veröffentlichungstag der Anmeldung: 21.09.2022
(73) Patentinhaber: Deutsches Zentrum für Luft- und Raumfahrt e.V., 53227 Bonn (DE)
(72) Erfinder: ORTELT, Markus, 74223 Flein (DE); HERDRICH, Georg, 73733 Esslingen (DE); ROMANO, Francesco, 70569 Stuttgart (DE)
(74) Vertreter: Fleck, Julia Maria
(86) Internationale Anmeldenummer: PCT/EP2020/080365
(87) Internationale Veröffentlichungsnummer: WO 2021/094094

(56) Entgegenhaltungen:
- EP-A1- 1 192 680
- EP-A1- 3 311 438
- CN-A- 108 899 564
- US-A1- 2015 337 763

## Beschreibung

Die Erfindung betrifft eine Triebwerkanordnung für ein Raumfahrzeug, mit einer Antriebseinheit zur Erzeugung einer Schubkraft, mit zumindest einem Verbraucher elektrischer Energie und mit einer Energieliefereinrichtung zur Erzeugung elektrischer Energie insbesondere zur Versorgung des zumindest eines Verbrauchers. Ferner betrifft die Erfindung ein Verfahren zum Betreiben einer Triebwerkanordnung.

Raumfahrtantriebe können in unterschiedliche Klassen eingeteilt werden. So sind chemische Hochleistungsantriebe für große Schubleistungen in Starter-Stufen für den Transport vom Erdboden in orbitale Bahnen konzipiert. Dabei werden insbesondere thermische Brennstoffe bzw. Treibstoffe mittels Pumpen und/oder Druckgas in Schubkammern gefördert. Daneben existieren chemische Antriebe mittlerer Leistung für Exploration, Bandtransfer, Bahn- und Lageregelung, die z. B. Druck-Gas-Fördersysteme zur Treibstoffförderung verwenden. In elektrischen Orbital-Antrieben wird zur Schuberzeugung elektrische Energie verwendet, wobei z. B. Lichtbogenenergie zur Impulserzeugung mittels Stütz-Gas eingesetzt wird. Zudem sind Kaltgasantriebe bekannt, die das Druckpotenzial eines gespeicherten Gases zur Schuberzeugung durch Rückstoß bei Ausblasen des Gases nutzen.

Eine Triebwerkanordnung der oben genannten Art ist beispielsweise aus der US 2014/0283499 A1 bekannt. Dabei weist eine Zufuhreinrichtung zur Versorgung einer Schubkammer des Raketentriebwerks eine Treibstoff-Versorgungseinrichtungen auf, die eine elektrische Pumpe umfasst. Die elektrische Pumpe wird von einer externen elektrischen Quelle oder Batterie mit elektrischer Energie versorgt.

Die CN 107 878 783 A zeigt eine Triebwerkanordnung mit einer Fluidmanagementvorrichtung umfassend eine reversible Brennstoffzelle sowie einen Wasserstofftank und einen Oxidatortank. Neben der Verwendung in der Brennstoffzelle können Wasserstoff und Sauerstoff auch in einem Triebwerk zur Schuberzeugung verbrannt werden.

Die US 2010 / 0 213 319 A1 offenbart ein chemisches Antriebssystem mit einer regenerativen Brennstoffzelle zur Energieversorgung elektronischer Systeme bei der Abwesenheit von Sonnenlicht.

In der EP 3 311 438 B1 ist eine Redox-Durchflussbatterie und deren genauer Aufbau angegeben, wobei auch die Verwendung in der Raumfahrt angesprochen ist.

Die US 2015/0337763 A1 zeigt ein Raumfahrzeug mit einem Raketenantrieb, bei dem zumindest eine Wärmequelle mittels eines Treibstoffes zur Versorgung des Raketenantriebs gekühlt wird.

In der CN 108 899 564 A ist ein Kühlsystem für eine Durchflussbatterie angegeben.

Die EP 1 192 680 A1 offenbart eine reversible Brennstoffzelle sowie ein Verfahren zum Betreiben derselben.

Eine Triebwerkanordnung mit einer elektrischen Pumpe ist aus der WO 99/65769 bekannt. Die elektrische Pumpe wird durch eine Batterie mit hoher Energiedichte, Superkondensatoren oder Schwungrädern mit elektrischer Energie versorgt.

Zur Versorgung von elektrischen Verbrauchern mit elektrischer Energie, wie z. B. von elektrischen (Treibstoff-) Pumpen und/oder einer Einrichtung zur Schuberzeugung mittels elektrischer Energie, werden z. B. Batterieanordnungen mitgeführt. Diese weisen ein hohes Gewicht auf, was die Nutzlastkapazität bzw. den spezifischen Impuls deutlich mindert.

Der Erfindung liegt die Aufgabe zugrunde, eine Triebwerkanordnung mit einer erhöhten Effizienz bereitzustellen, sowie ein entsprechendes Verfahren.

Die Aufgabe wird für die Triebwerkanordnung mit den Merkmalen des Anspruchs 1 gelöst. Dabei ist vorgesehen, dass die Energieliefereinrichtung eine Durchflussbatterieanordnung aufweist, wobei elektrische Energie mittels zumindest eines Elektrofluids (insbesondere zumindest eines Elektrolyts) erzeugbar ist, welches in einem Elektrofluidkreislauf mit einer Elektrofluidspeichereinrichtung und einer galvanischen Zelle, umfassend eine Membran, zirkuliert und dass eine Elekrofluidleitung vorhanden ist, mittels welcher das (insbesondere verbrauchte, d. h. nicht mehr (effizient) zur elektrischen Energieerzeugung nutzbare) Elektrofluid aus dem Elektrofluidkreislauf der Energieliefereinrichtung entnehmbar und in einen anderen Bereich der Triebwerkanordnung zur weiteren Verwendung zuführbar und/oder aus der Triebwerkanordnung ausstoßbar ist. Die Elektrofluidleitung steht mit einer oder mehreren Elektrofluidkreisläufen in Strömungsverbindung.

Durchflussbatterieanordnungen sind auch unter der Bezeichnung "Redox-Flow-Batterie" bekannt. Dabei zirkulieren z. B. zwei Elektrofluide in zwei getrennten Elektrofluidkreisläufen aus den jeweils externen, d. h. außerhalb der galvanischen Zelle angeordneten, Elektrofluidspeichereinrichtungen durch jeweils eine Halbzelle der galvanischen Zelle, wobei die Elektrofluide mit der Membran in Kontakt treten. Die Membran trennt die beiden Halbzellen strömungstechnisch und ist derart ausgebildet, dass sie Ionen (Kationen oder Anionen) zumindest eines Elektrofluids passieren lässt. An einer in der galvanischen Zelle vorhandenen Elektrode läuft unter Stromerzeugung eine Reduktion oder Oxidation ab. Zur Unterstützung der Rezirkulationsbewegung kann (jeweils) eine Pumpe in dem Elektrofluidkreislauf vorhanden sein, die z. B. mittels elektrischer Energie aus der Durchflussbatterieanordnung betrieben wird. Der (jeweilige) Elektrofluidkreislauf kann offen oder geschlossen ausgebildet sein. Die Elektrofluidspeichereinrichtung(en) ist/sind vorzugsweise derart ausgebildet, dass das Elektrofluid ähnlich einem normalen Treibstoff getankt werden kann.

Es hat sich herausgestellt, dass sich durch die erfindungsgemäße Ausbildung der Energieliefereinrichtung vorteilhaft die Gesamteffizienz der Triebwerkanordnung steigern lässt.

In einer bevorzugten Ausbildungsvariante weist die Triebwerkanordnung eine Treibstoffperipherie auf, mittels welcher der Antriebseinheit zumindest ein Fluid, insbesondere Treibstoff und/oder Oxidator (der z. B. auch ein Monopropellant sein kann), zuführbar ist, wobei die Treibstoffperipherie eine mit elektrischer Energie betreibbare (Fluid-)Fördereinrichtung, insbesondere eine elektrische Pumpenvorrichtung, aufweist. Die Fördereinrichtung bzw. die elektrische Pumpenvorrichtung umfasst insbesondere einen Elektromotor und bildet einen Verbraucher elektrischer Energie in vorstehendem Sinne. Die elektrische Fördereinrichtung weist im Vergleich zu einer mit einem Gasgenerator betriebenen Fluid-Fördereinrichtung eine vorteilhafte Regelbarkeit und Handhabbarkeit sowie eine geringere Komplexität auf.

Vorzugsweise steht die Energieliefereinrichtung mit der Treibstoffperipherie, insbesondere mit der elektrischen Fördereinrichtung, zur elektrischen Energieversorgung in elektrischer Verbindung. Die Energieliefereinrichtung kann z. B. einen Teil der Treibstoffperipherie bilden und/oder noch weitere vorhandene Verbraucher mit elektrischer Energie versorgen. Bei chemischen Hochleistungsantrieben ist aufgrund des hohen Energieverbrauchs der Fördereinrichtung die Energieliefereinrichtung entsprechend leistungsstark auszulegen. Es hat sich herausgestellt, dass insbesondere die Kombination der Energieliefereinrichtung zur Energieversorgung der elektrischen Fördereinrichtung Vorteile hinsichtlich der Effizienz der Triebwerkanordnung bieten kann.

Als vorteilhaft hat sich herausgestellt, wenn die Antriebseinheit eine Brennkammervorrichtung mit einer Umfangswand sowie eine (stromab des Brennraums der Brennkammervorrichtung angeordnete) Düse umfasst. Somit handelt es sich um einen chemischen Antrieb, insbesondere um einen chemischen Hochleistungsantrieb, wobei Treibstoff und/oder Oxidator insbesondere in großen Mengen, an die Brennkammer zu fördern ist. Die Energieliefereinrichtung ist entsprechend leistungsstark auszulegen.

Dabei ist in einer vorteilhaften, z. B. besonders günstig kühlbaren, Ausbildungsvariante zumindest die Umfangswand zumindest teilweise aus einem keramischen Verbundwerkstoff, insbesondere aus einem CMC (Ceramic Matrix Composites)-Material ausgebildet. Der keramische Verbundwerkstoff weist dabei insbesondere eine poröse Wandstruktur auf.

In einer weiteren bevorzugten Ausbildungsvariante ist mittels der Elektrofluidleitung das insbesondere verbrauchte, d. h. nicht mehr (effizient) zur elektrischen Energieerzeugung nutzbare, Elektrofluid stromab der galvanischen Zelle aus dem Elektrofluidkreislauf entnehmbar und in einen anderen Bereich der Triebwerkanordnung zu Kühlzwecken der Antriebseinheit, zuführbar. Zusätzlich (oder alternativ) kann das Elektrofluid auch dabei mittels der Elektrofluidleitung aus der Triebwerkanordnung, ggf. auch ohne weitere Funktion, ausstoßbar sein. Die Elektrofluidleitung kann auch mit mehreren Elektrofluidkreisläufen in Strömungsverbindung stehen, wobei z. B. zumindest ein oder mehrere Ventilmittel zum Öffnen bzw. Schließen der Leitung bzw. der Strömungsverbindung vorhanden sein können. So kann dem Elektrofluid vorteilhaft eine Mehrfachfunktion zukommen, nämlich neben der elektrischen Energieerzeugung zumindest eine weitere Funktion, z. B. als Kühlmedium und/oder, insbesondere der Antriebseinheit, als Impulsmasse zur Schuberzeugung. Die Weiterverwendung des (zur elektrischen Energieerzeugung verbrauchten) Elektrofluids trägt zur Steigerung der Gesamteffizienz der Triebwerkanordnung bei. Mit dem Ausstoß reduziert sich zudem kontinuierlich die Masse der Energieliefereinrichtung und damit der Triebwerkanordnung, wodurch sich die Effizienz der Triebwerkanordnung erhöht.

Dabei umfasst vorzugsweise die Antriebseinheit ein Kühlsystem und die Energieliefereinrichtung steht mittels der Elektrofluidleitung mit der Antriebseinheit, insbesondere dem Kühlsystem, in Strömungsverbindung, wobei das, insbesondere verbrauchte, Elektrofluid zu Kühlzwecken der Antriebseinheit zuführbar ist. Besonders bevorzugt wird dabei das Elektrofluid nach Energieabgabe zunächst als Kühlfluid z. B. für die Triebwerkstruktur bzw. Struktur der Antriebseinheit und z. B. anschließend als Impulsmasse durch Ausstoß aus der Düse zur Vortriebserzeugung verwendet. Durch die Verwendung als Kühlfluid kann ggf. mitzuführende Kühlmasse eingespart und dadurch Gewicht reduziert werden. Auf diese Weise wird die Gesamteffizienz erhöht, was beispielsweise eine Treibstoffersparnis bewirkt.

Zweckmäßigerweise kann das Kühlsystem zumindest eine Filmkühlungsanordnung zur Filmkühlung der Brennkammervorrichtung und/oder der Düse aufweisen und kann die Elektrofluidleitung derart mit dem Kühlsystem in Strömungsverbindung stehen, dass das Elektrofluid mittels der Filmkühlungsanordnung zur Filmkühlung verwendbar ist. Dazu ist vorzugsweise die Elektrofluidleitung an geeigneter Stelle an das Kühlsystem angekoppelt. Das Elektrofluid kann alleinig oder zusätzlich zu einem weiteren (Filmkühlungs-)Fluid verwendet werden. Dabei wird das Elektrofluid vorzugsweise durch entsprechende Öffnungen in der Umfangswand und/oder der Düse zugegeben, um einen Kühlfilm auf der Wandungsoberfläche zu bilden und das entsprechende Bauteil vor Kontakt und Überhitzung durch heiße Gase zu schützen.

Zusätzlich oder alternativ kann das Kühlsystem zur Transpirationskühlung der Brennkammervorrichtung, insbesondere der Umfangswandung, ausgebildet sein und kann die Elektrofluidleitung derart mit dem Kühlsystem in Strömungsverbindung stehen, dass das Elektrofluid als Kühlfluid zur Transpirationskühlung verwendbar ist. Dazu ist vorzugsweise die Elektrofluidleitung an geeigneter Stelle an das Kühlsystem angekoppelt. Das Elektrofluid kann alleinig oder zusätzlich zu einem weiteren Fluid verwendet werden. Diese Variante ist insbesondere vorteilhaft mit der Umfangswandung in Ausbildung durch einen keramischen Verbundwerkstoff. Dabei kann/können die Umfangswand und/oder weitere Abschnitte, z. B. Teile der Düse, von einem oder mehreren Kühlverteilerkanal/-kanälen bzw. -Verteilerraum/-räumen umgeben sein, durch den bzw. die das Kühlfluid, hier das Elektrofluid, an die Umfangswand und/oder die weiteren Abschnitte herangeführt wird. Anschließend gelangt das Kühlfluid bzw. Elektrofluid, gemäß dem Wesen der Transpirationskühlung, durch die poröse Wandstruktur, hier des keramischen Verbundwerkstoffes, an die gegenüberliegende, in Richtung heißer Gase weisende Oberfläche. Durch die Transpirationskühlung kann vorteilhaft eine hohe Kühlleistung erreicht werden.

Zusätzlich oder alternativ ist das Kühlsystem zur konvektiven Kühlung der Antriebseinheit ausgebildet und steht die Elektrofluidleitung derart mit dem Kühlsystem in Strömungsverbindung, dass das Elektrofluid als Kühlfluid zur Konvektionskühlung verwendbar ist. Insbesondere kann es sich dabei um eine regenerative Kühlung handeln, wobei z. B. Brennstoff und/oder Oxidator innerhalb eines Kühlkanals (oder mehrerer Kühlkanäle) außen entlang der Brennkammerwand zu deren konvektiver Kühlung geführt wird, bevor er eingespritzt wird. Dabei kann das Elektrofluid dem Brennstoff und/oder dem Oxidator beigemischt werden und/oder zumindest teilweise ersetzen. Auch sonstiges ggf. benötigtes Kühlfluid kann zumindest teilweise durch das Elektrofluid ersetzt werden, wodurch Gesamtmasse eingespart werden kann. Anschließend kann das Elektrofluid als Stütz-Gas als Impulsmasse zur Vortriebserzeugung verwendet werden.

Verzugsweise steht die Elektrofluidleitung derart mit der Antriebseinheit in Strömungsverbindung, dass das, insbesondere verbrauchte, Elektrofluid der Antriebseinheit als Impulsmasse zuführbar ist. Besonders bevorzugt wird dabei das Elektrofluid nach Energieabgabe zunächst als Kühlfluid z. B. für die Triebwerkstruktur bzw. Struktur der Antriebseinheit und anschließend als Impulsmasse durch Ausstoß aus der Düse zur Vortriebserzeugung verwendet. Auch eine Verwendung als Impulsmasse ohne vorherige Kühlfunktion ist möglich, z. B. bei einer ungekühlten Antriebseinheit. Im Gegensatz zu beispielsweise Akkumulatoren als elektrische Energieliefereinrichtung reduziert sich mit dem Ausstoß kontinuierlich die Masse der Energieliefereinrichtung und damit der Triebwerkanordnung, was den Vortrieb erhöht. Gleichzeitig erfüllt das Elektrofluid zumindest eine, vorzugsweise zwei wichtige Zusatzfunktionen, nämlich als Impulsmasse und/oder als Kühlfluid, für welche bisher zusätzlich Masse mitgeführt werden musste. Auf diese Weise wird die Gesamteffizienz erhöht, was insbesondere eine Treibstoffersparnis bewirkt.

In einer bevorzugten Ausbildungsvariante bildet die Umfangswand einen Teil der Durchflussbatterieanordnung, wobei sie beispielsweise als Hohlkörper ausgebildet ist. Dabei kann beispielsweise ein oder können mehrere Räume innerhalb des Hohlkörpers gebildet sein. Beispielsweise kann der Hohlkörper als galvanische Zelle dienen und der innerhalb des Hohlkörpers befindliche Raum durch eine Membran in zwei Halbzellen geteilt werden. Denkbar ist auch eine Nutzung der Umfangswand als Elektrofluidspeichereinrichtung. Bei einer zylindrischen Ausbildung der Umfangswand kann diese beispielsweise als Doppelzylinder, mit einem zwischen den Zylinderwandungen angeordneten Hohlraum, ausgebildet sein, in dem zusätzlich eine zylindrisch geformte Membran zur Teilung des gebildeten Raums eingesetzt sein kann. Dadurch kann vorteilhaft Raum und Gewicht eingespart werden.

Ein weiteres vorteilhaftes Anwendungsfeld ergibt sich, wenn die Antriebseinheit zur Schuberzeugung mittels elektrischer Energie ausgebildet ist, wobei die Antriebseinheit mit der Energieliefereinrichtung mittels einer elektrischen Verbindung zur Versorgung mit elektrischer Energie gekoppelt ist. So können die Vorzüge eines elektrischen Antriebs genutzt werden. Das Elektrofluid kann dabei vorteilhaft als Impulsmasse zur Schuberzeugung genutzt werden, wobei es zumindest einen Teil eines Arbeitsgases bildet. Bei dem elektrischen Antrieb kann es sich beispielsweise um einen Plasmaantrieb handeln, wobei das Arbeitsgas mittels Lichtbogen erhitzt und durch Expansion durch die Düse Schub erzeugt wird. Weiterhin kann es sich vorteilhaft um einen elektrischen Induktionsantrieb handeln, da dessen Elektrodenfreiheit den Betrieb beispielsweise auch mit reaktiven Treibstoffen als Arbeitsfluid ermöglicht, z. B. zusätzlich zu dem Elektrofluid (etwa vor dessen Einsatz oder nach dessen Verbrauch). Ein beispielhafter Plasmaantrieb und ein beispielhafter Induktionsantrieb sind in der Publikation "A. Chadwick, T. Janocha, G. Herdrich, B. Dally, M. Kim, Wall Temperature Measurements within a High Power Inductive Plasma Discharge, IEEE Transactions on Plasma Science, Published in: IEEE Transactions on Plasma Science, Volume: PP, Issue: 99, Page(s): 1 - 7, 06 March 2018, DOI: 10.1 109/TPS.2018.2805473" veröffentlicht.

In einer weiter effizienzsteigernden Ausbildung kann die Energieliefereinrichtung weiterhin zumindest eine thermoelektrische Generatoranordnung umfassen. Ein Beispiel für eine thermoelektrische Generatoranordnung ist der DE 10 2017 109 732 A1 entnehmbar.

Für das Verfahren wird die Aufgabe mit den Merkmalen des Anspruchs 13. Ausführungsvarianten des Verfahrens sind in Zusammenhang mit der Triebwerkanordnung und deren vorteilhaften Ausgestaltungsvarianten sinngemäß beschrieben.

Nachfolgend wird die Erfindung anhand von Ausführungsbeispielen unter Bezugnahme auf die Zeichnungen näher erläutert. Es zeigen:
- Fig. 1: eine schematische Darstellung eines Teils einer Triebwerkanordnung mit einer Energieliefereinrichtung umfassend eine Durchflussbatterieanordnung und mit Teilen einer Treibstoffperipherie sowie einer Antriebseinheit,
- Fig. 2A, B, C: schematische Darstellungen der Prinzipien einer Transpirationskühlung (Fig. 2A), einer regenerativen Kühlung (Fig. 2B) und einer Filmkühlung (Fig. 2C) und
- Fig. 3: eine Schnittdarstellung einer elektrischen Antriebseinheit, die mit einer Energieliefereinrichtung umfassend eine Durchflussbatterieanordnung betreibbar ist, als weiteres Ausführungsbeispiel.

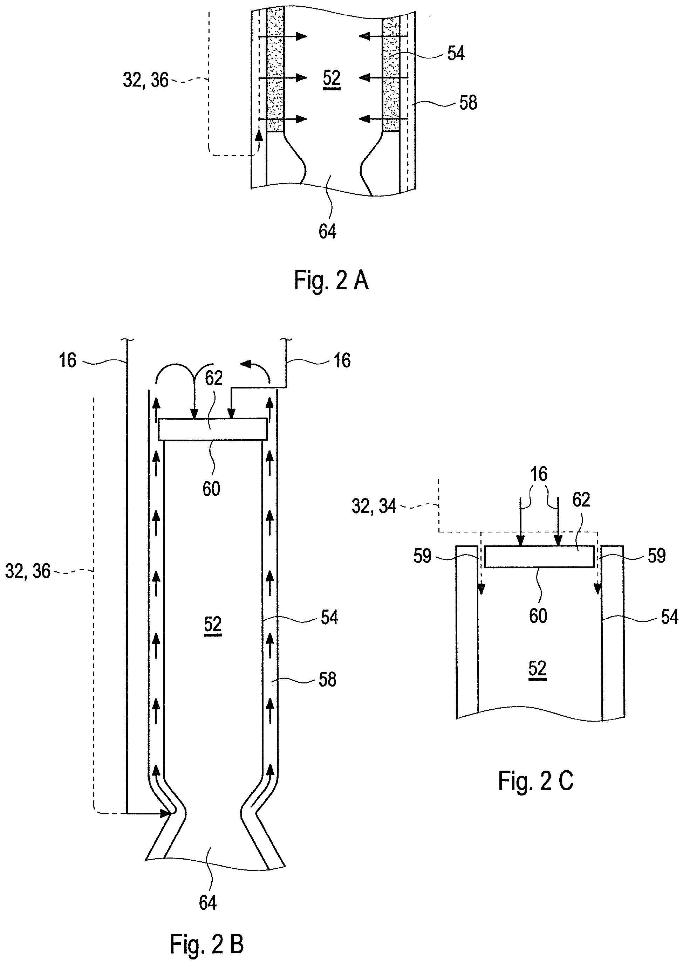

- Fig. 2A, B, C: schematische Darstellungen der Prinzipien einer Transpirationskühlung (Fig. 2A), einer regenerativen Kühlung (Fig. 2B) und einer Filmkühlung (Fig. 2C) und

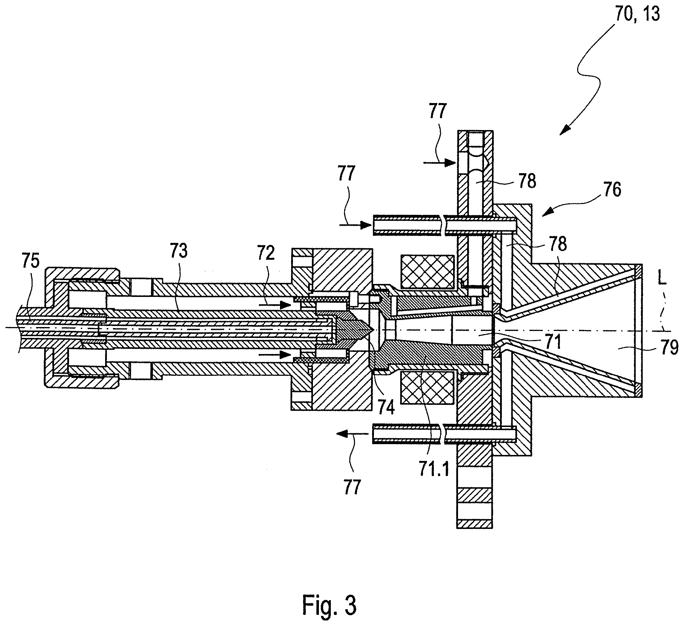

- Fig. 3: eine Schnittdarstellung einer elektrischen Antriebseinheit, die mit einer Energieliefereinrichtung umfassend eine Durchflussbatterieanordnung betreibbar ist, als weiteres Ausführungsbeispiel.

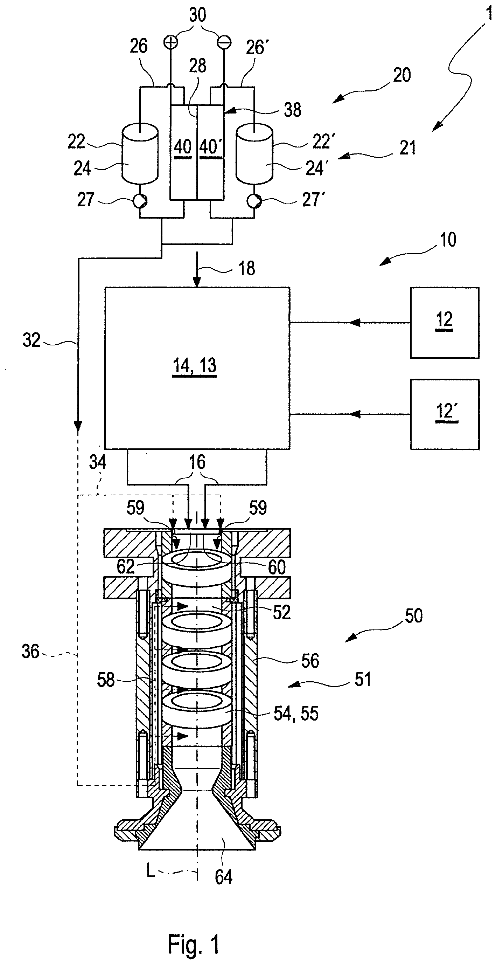

Fig. 1 zeigt schematisch Teile einer Triebwerkanordnung 1 für ein Raumfahrzeug. Die Triebwerkanordnung 1 kann beispielsweise bei einem chemischen Hochleistungsantrieb zur Erzeugung hoher Schubleistungen in Starter-Stufen für den Transport vom Erdboden in orbitale Bahnen eingesetzt werden.

Die Triebwerkanordnung 1 umfasst eine Antriebseinheit 50 mit einer Brennkammervorrichtung 51, die sich mit einem hier beispielhaft zylindrischen Brennraum 52 entlang einer Längsachse L erstreckt. Die Brennkammervorrichtung 51 ist vorliegend in einem Längsschnitt dargestellt, wobei Segmente einer Umfangswand 54 des Brennraums 52 ungeschnitten in einer perspektivischen Explosionsdarstellung gezeigt sind. Stromab des Brennraums 52 ist eine Düse 64 zur Schuberzeugung für den Vortrieb des Raumfahrzeugs angeordnet. Bei der Antriebseinheit 50 handelt es sich beispielhaft um einen chemischen Antrieb, wobei Treibstoff und/oder Oxidator dem Brennraum 52 zugeführt werden, wo unter Wärmeerzeugung eine Oxidation stattfindet. Weitere Details der Antriebseinheit 50, wie z. B. die genauere Ausbildung einer Injektorvorrichtung 62 an einer Stirnseite 60, sind nicht dargestellt.

Der Brennraum 52 mündet stromab in der Düse 64 zur Schuberzeugung. Dazu weist die Brennkammervorrichtung 51 zunächst eine Querschnittsverengung gegenüber dem stromaufgelegenen Brennraum 52 auf, dessen Querschnitt sich anschließend erweitert.

Die Brennkammervorrichtung 51 weist die hier beispielhaft zylindrisch ausgebildete Umfangswand 54 auf, die den Brennraum 52 umlaufend umgibt. Wie die perspektivischer Explosionsdarstellung zeigt, ist die Umfangswand 54 beispielhaft aus mehreren, hier ringförmig ausgebildeten, Segmenten 55 gebildet, die vorzugsweise aus einem keramischen Verbundwerkstoff (CMC - Ceramic Matrix Composite) bestehen. Der keramische Verbundwerkstoff weist vorzugsweise eine poröse Struktur, zur Bildung einer porösen Wandstruktur der Umfangswandung 54, auf. Die Umfangswand 54 ist in einen Hohlraum einer als Haltestruktur dienenden Peripherie 56 eingebracht, die zur stabilen, gasdichten Halterung der einzelnen Segmente 55 ausgebildet ist, so dass zwischen den einzelnen Ringsegmenten kein Strömungspfad entsteht. Zu diesem Zweck ist zwischen den einzelnen Segmenten 55 vorzugsweise ein Dichtmittel vorhanden (hier nicht gezeigt).

Die Peripherie 56 umfasst zumindest Teile eines Kühlsystems mit einem sich z. B. teilweise ringartig um die Umfangswand 54 erstreckenden Kühlkanal 58. Durch den Kühlkanal 58 kann zu Kühlzwecken ein Kühlfluid eingebracht werden. Das Kühlfluid kann im Kühlbetrieb z. B. zur Transpirationskühlung verwendet werden, wobei es durch die poröse Struktur der Umfangswand 54 in den Brennraum 52 gelangt und so die Umfangswand 54 kühlt. Das Prinzip der Transpirationskühlung ist schematisch in Fig. 2A verdeutlicht. Auch zumindest Teile der Düse 64 können dadurch gekühlt werden.

Als alternative oder zusätzliche Kühlungsvariante ist eine konvektive bzw. regenerative Kühlung möglich, deren Prinzip schematisch in Fig. 2B dargestellt ist. Dabei wird z. B. Brennstoff und/oder Oxidator innerhalb des Kühlkanals 58 (oder mehrerer Kühlkanäle 58) außen entlang der Umfangswand 54 und/oder der Düse 64 zu deren konvektiver Kühlung geführt, bevor er über die (nicht im Detail dargestellt) Injektorvorrichtung 62 in den Brennraum 52 eingespritzt wird. Dabei kann das Elektrofluid dem Brennstoff und/oder dem Oxidator beigemischt werden und/oder diese/n zumindest teilweise ersetzen.

Zusätzlich oder alternativ kann das Kühlsystem eine oder mehrere Filmkühlungsanordnung/en aufweisen, wobei z. B. eine Filmkühlungsanordnung an der Stirnseite 60 angeordnet sein kann. Das Prinzip der Transpirationskühlung ist schematisch in Fig. 2C verdeutlicht. Dabei kann Kühlfluid über z. B. in der Stirnseite 60 bzw. der Injektorvorrichtung 62 vorhandene Zufuhröffnungen 59, z. B. entlang der Umfangswand 54 und/oder der Düse 64 (hier nicht gezeigt) eingebracht werden. Auf diese Weise bildet sich ein insbesondere konvektiver Kühlfilm an der Innenwand der Umfangswand 54 zum Schutz vor thermischer Überbelastung durch die im Betrieb entstehenden heißen Gase.

Zur Versorgung der Antriebseinheit 50 mit Treibstoff und/oder Oxidator umfasst die Triebwerkanordnung 1 weiterhin eine Treibstoffperipherie 10 mit zumindest einer Speichereinrichtung 12, vorzugsweise jeweils einer Speichereinrichtung 12, 12' für Treibstoff und Oxidator. Die Treibstoffperipherie umfasst zudem eine Fördereinrichtung 14 zur Förderung des Treibstoffes und/oder Oxidators über Leitungsmittel 16 an die Antriebseinheit 50. Vorliegend ist die Fördereinrichtung als elektrische Pumpe umfassend einen Elektromotor ausgebildet. Die Fördereinrichtung 14 bildet somit einen Verbraucher 13 elektrischer Energie.

Zur Versorgung der Fördereinrichtung 14, und gegebenenfalls weiterhin vorhandener elektrischer Verbraucher 13, mit elektrischer Energie umfasst die Triebwerkanordnung 1 eine Energieliefereinrichtung 20, die mit der Fördereinrichtung 14 über eine elektrische Verbindung 18 gekoppelt ist. Die Energieliefereinrichtung 20 umfasst eine Durchflussbatterieanordnung 21, auch unter der Bezeichnung "Redox-Flow-Batterie" bekannt. Die Durchflussbatterieanordnung 21 umfasst zumindest ein, vorzugsweise zwei Elektrofluide 24, 24' z. B. als Redox-Paar, insbesondere Elektrolyte, die jeweils in einem Elektrofluidkreislauf 26, 26' der Durchflussbatterieanordnung 21 zirkulieren.

Zur Unterstützung der Rezirkulationsbewegungen können in dem Elektrolytkreislauf 26, 26' Fördereinrichtungen 27, 27' vorhanden sein. Dabei gelangen die Elektrofluide 24, 24' jeweils aus einer externen Elektrofluidspeichereinrichtung 22, 22' des Elektrofluidkreislaufs 26, 26' in eine galvanische Zelle 38. Die galvanische Zelle 38 ist durch eine ionendurchlässige Membran 28 in zwei Halbzellen 40, 40' unterteilt. Ferner umfasst die galvanische Zelle eine Elektrodeneinrichtung 30. Zur Erzeugung elektrischer Energie zirkuliert jeweils eines der Elektrofluide 24, 24' durch jeweils eine der Halbzellen 40, 40' an der Membran 28 vorbei und anschließend z. B. zurück in die jeweilige Elektrofluidspeichereinrichtung 22, 22'.

Möglich ist auch, dass die Umfangswand 54 einen Teil der Durchflussbatterieanordnung 21 bildet (hier nicht gezeigt). Dabei kann sie beispielsweise als Hohlkörper ausgebildet sein, wobei ein oder mehrere Räume innerhalb des Körpers gebildet sein können.

Mit zumindest einem der Elektrofluidkreisläufe 26, 26' steht eine Elektrofluidleitung 32 in Strömungsverbindung. Die Elektrofluidleitung 32 dient dazu, verbrauchtes Elektrofluid 24, 24' aus der Energieliefereinrichtung 20 in einen anderen Bereich der Triebwerkanordnung 1, zu dessen weiterer Verwendung, zu leiten. Die Elektrofluidleitung 32' ist derart an den Elektrofluidkreislauf 26, 26' angekoppelt, dass verbrauchtes Elektrofluid 24, 24', insbesondere stromab der galvanischen Zelle 38, aus dem Elektrofluidkreislauf 26, 26' entnehmbar ist. Zur Steuerung bzw. Regelung über eine (nicht gezeigte) Steuereinrichtung der entnommenen Menge an Elektrofluid 24, 24' können an der oder den Kopplungsstelle/n z. B. ein oder mehrere steuerbare Ventilmittel vorhanden sein (hier nicht gezeigt).

Vorliegend wird beispielhaft das verbrauchte Elektrofluid 24, 24' zunächst zu Kühlzwecken der Antriebseinheit 50 zugeführt. Dabei gelangt das Elektrofluid 24, 24' in Funktion als Kühlfluid in die Brennkammervorrichtung 51, um diese zu kühlen. Auf diese Weise gelangt das Elektrofluid 24, 24' in den Brennraum 52 und vergrößert die Impulsmasse zur Ausströmung aus der Düse 64, wodurch der erzeugte Vortrieb erhöht wird. Somit erfüllt das Elektrofluid 24, 24' nach dem Verbrauch zur elektrischen Energieerzeugung wichtige Zusatzfunktionen, nämlich als Kühlfluid und als Impulsmasse. Gleichzeitig wird durch Ausstoß des verbrauchten Elektrofluids 24, 24' aus der Antriebseinheit 50 die anzutreibende Gesamtmasse der Triebwerkanordnung 1 verringert. In Summe wird so die Gesamteffizienz der Triebwerkanordnung 1 vorteilhaft erhöht.

Wie in Fig. 1 gezeigt, kann die Elektrofluidleitung 32 einen ersten Leitungsabschnitt 34 und/oder einen zweiten Leitungsabschnitt 36 umfassen. Über die Leitungsabschnitte 34 und 36 kann das Elektrofluid 24, 24' als Kühlfluid der Filmkühlungsanordnung und/oder zur Transpirationskühlung verwendet werden. Denkbar ist auch die Verwendung zusätzlich zu einem weiteren Kühlfluid, wobei auch z. B. zeitweise der Anteil des Elektrofluids 24, 24' zu dem Kühlfluid veränderbar ist.

Eine weitere vorteilhafte Triebwerkanordnung 1 ergibt sich in Verbindung mit einer Antriebseinheit, die zur Schuberzeugung mittels elektrischer Energie ausgebildet ist (Prinzip vgl. Fig. 3). Dabei ist die Antriebseinheit mit der Energieliefereinrichtung 20 mittels einer elektrischen Verbindung zur Versorgung mit elektrischer Energie gekoppelt. Die Antriebseinheit stellt somit einen elektrischen Verbraucher 13 dar, der von der Energieliefereinrichtung 20 versorgt wird.

Das Prinzip, wie es einer derartige Antriebseinheit in Ausbildung als Plasmaantrieb bzw. als Plasmagenerator zugrunde liegt, ist in einem Aufbau 70 in Fig. 3 gezeigt (vgl. auch "S. Löhle, M. Auweter-Kurtz, G. Herdrich, T. Laux, LIF Measurements of NO in N2/O2 and N2/CO2 Plasma Flows, Paper AIAA-2003-3487, 37thThermophysics Conference, Orlando, FL, USA, Juni 2003"). Der Aufbau 70 weist eine Bogenkammerwandung 71.1 auf, die eine Anode bildet und eine Bogenkammer 71 umgibt. Eine Kathode 74 ist an einer eintrittsseitigen Stirnseite der Bogenkammer 71 angeordnet und steht mittels einer elektrischen Verbindung 75 mit der Energieliefereinrichtung in Kontakt (hier nicht gezeigt). Weiterhin umfasst der Aufbau 70 eine Zuleitung 73 für ein Arbeitsgas 72 an die Kathode 74 bzw. in die Bogenkammer 71. Optional ist in einer Peripherie 76 ein Kühlsystem mit Kühlkanälen 78 zur Leitung von Kühlmedium 77 und Kühlung des Aufbaus 70 vorhanden.

Im Betrieb wird das Arbeitsgas 72 mittels Lichtbogen erhitzt. Durch anschließende Expansion des Arbeitsgases 72 über eine Düse 79 wird Schub erzeugt. Vorzugsweise kann das Elektrofluid 24, 24' dabei vorteilhaft als Impulsmasse zur Schuberzeugung genutzt werden, wobei es zumindest einen Teil des Arbeitsgases 72 bildet. Dazu steht die Elektrofluidleitung 32 (vgl. Fig. 1) z. B. mit der Zuleitung 73 in Strömungsverbindung (hier nicht gezeigt).

Bei den in Fig. 1 und 3 gezeigten Ausführungsbeispielen kann die Energieliefereinrichtung 20, zur weiteren Wirkungsgradsteigerung, neben der Durchflussbatterieanordnung 21 zumindest eine thermoelektrische Generatoranordnung umfassen (hier nicht gezeigt).

## Patentansprüche

1. Triebwerkanordnung (1) für ein Raumfahrzeug, mit einer Antriebseinheit (50) zur Erzeugung einer Schubkraft, mit zumindest einem Verbraucher (13) elektrischer Energie und mit einer Energieliefereinrichtung (20) zur Erzeugung elektrischer Energie insbesondere zur Versorgung des zumindest einen Verbrauchers (13),
**dadurch gekennzeichnet,**
**dass** die Energieliefereinrichtung (20) eine Durchflussbatterieanordnung (21) aufweist, wobei elektrische Energie mittels zumindest eines Elektrofluids (24, 24') erzeugbar ist, welches innerhalb eines Elektrofluidkreislaufs (26) mit einer Elektrofluidspeichereinrichtung (22) und einer eine Membran (28) umfassenden galvanischen Zelle (38) zirkuliert, und
**dass** eine Elektrofluidleitung (32) vorhanden ist, mittels welcher das Elektrofluid (24, 24') aus dem Elektrofluidkreislauf (26) der Energieliefereinrichtung (20) entnehmbar und in einen anderen Bereich der Triebwerkanordnung (1) zur weiteren Verwendung zuführbar ist und/oder aus der Triebwerkanordnung (1) ausstoßbar ist.

2. Triebwerkanordnung (1) nach Anspruch 1,
**dadurch gekennzeichnet,**
**dass** die Triebwerkanordnung (1) eine Treibstoffperipherie (10) aufweist, mittels welcher der Antriebseinheit (50) zumindest ein Fluid, insbesondere Treibstoff und/oder Oxidator, zuführbar ist, wobei die Treibstoffperipherie (10) eine mit elektrischer Energie betreibbare Fördereinrichtung (14), insbesondere eine elektrische Pumpenvorrichtung, aufweist.

3. Triebwerkanordnung (1) nach Anspruch 2,
**dadurch gekennzeichnet,**
**dass** die Energieliefereinrichtung (20) mit der Treibstoffperipherie (10), insbesondere mit der elektrischen Fördereinrichtung (14), zur elektrischen Energieversorgung in elektrischer Verbindung steht.

4. Triebwerkanordnung (1) nach einem der vorhergehenden Ansprüche,
**dadurch gekennzeichnet,**
**dass** die Antriebseinheit (50) eine Brennkammervorrichtung (51) mit einer Umfangswand (54) sowie eine Düse (64) umfasst.

5. Triebwerkanordnung (1) nach Anspruch 4,
**dadurch gekennzeichnet,**
**dass** zumindest die Umfangswand (54) zumindest teilweise aus einem keramischen Verbundwerkstoff ausgebildet ist.

6. Triebwerkanordnung (1) nach einem der vorhergehenden Ansprüche,
**dadurch gekennzeichnet,**
**dass** mittels der Elektrofluidleitung (32) das Elektrofluid (24, 24'), insbesondere stromab der galvanischen Zelle (38), aus dem Elektrofluidkreislauf (26) der Energieliefereinrichtung (20) entnehmbar und in einen anderen Bereich der Triebwerkanordnung (1) zu Kühlzwecken und/oder, insbesondere der Antriebseinheit (50), als Impulsmasse zuführbar ist.

7. Triebwerkanordnung (1) nach einem der vorhergehenden Ansprüche,
**dadurch gekennzeichnet,**
**dass** die Antriebseinheit (50) ein Kühlsystem umfasst und
**dass** die Energieliefereinrichtung (20) mittels der Elektrofluidleitung (32) mit der Antriebseinheit (50), insbesondere dem Kühlsystem, in Strömungsverbindung steht, wobei das, insbesondere verbrauchte, Elektrofluid (24, 24') zu Kühlzwecken der Antriebseinheit (50) zuführbar ist.

8. Triebwerkanordnung (1) nach Anspruch 7,
**dadurch gekennzeichnet,**
**dass** das Kühlsystem zumindest eine Filmkühlungsanordnung zur Filmkühlung der Brennkammervorrichtung (51) und/oder der Düse (64) aufweist und dass die Elektrofluidleitung (32) derart mit dem Kühlsystem in Strömungsverbindung steht, dass das Elektrofluid (24, 24') mittels der Filmkühlungsanordnung zur Filmkühlung verwendbar ist.

9. Triebwerkanordnung (1) nach Anspruch 7 oder 8,
**dadurch gekennzeichnet,**
**dass** das Kühlsystem zur Transpirationskühlung der Brennkammervorrichtung (51), insbesondere der Umfangswand (54), ausgebildet ist und dass die Elektrofluidleitung (32) derart mit dem Kühlsystem in Strömungsverbindung steht, dass das Elektrofluid (24, 24') als Kühlfluid zur Transpirationskühlung verwendbar ist.

10. Triebwerkanordnung (1) nach einem der Ansprüche 7 bis 9,
**dadurch gekennzeichnet,**
**dass** das Kühlsystem zur konvektiven Kühlung der Antriebseinheit ausgebildet ist und
**dass** die Elektrofluidleitung (32) derart mit dem Kühlsystem in Strömungsverbindung steht, dass das Elektrofluid als Kühlfluid zur Konvektionskühlung verwendbar ist.

11. Triebwerkanordnung (1) nach einem der Ansprüche 4 bis 10,
**dadurch gekennzeichnet,**
**dass** die Umfangswand (54) einen Teil der Durchflussbatterieanordnung (21) bildet, wobei sie beispielsweise als Hohlkörper ausgebildet ist.

12. Triebwerkanordnung (1) nach einem der vorhergehenden Ansprüche,
**dadurch gekennzeichnet,**
**dass** die Antriebseinheit (50) zur Schuberzeugung mittels elektrischer Energie ausgebildet ist, wobei die Antriebseinheit (50) mit der Energieliefereinrichtung (20) mittels einer elektrischen Verbindung zur Versorgung mit elektrischer Energie gekoppelt ist und/oder
**dass** die Energieliefereinrichtung (20) weiterhin zumindest eine thermoelektrische Generatoranordnung umfasst.

13. Verfahren zum Betreiben einer Triebwerkanordnung (1), insbesondere nach einem der vorhergehenden Ansprüche, bei dem mit einer Antriebseinheit (50) eine Schubkraft zum Vortrieb eines Luft- oder Raumfahrzeugs erzeugt wird, wobei zumindest ein Verbraucher (13) mit elektrischer Energie über eine Energieliefereinrichtung (20) mit elektrischer Energie versorgt wird,
**dadurch gekennzeichnet,**
**dass** elektrische Energie in einer Durchflussbatterieanordnung (21) der Energieliefereinrichtung (20) mittels zumindest eines Elektrofluids (24, 24') erzeugt wird, welches innerhalb eines Elektrofluidkreislaufs (26) mit einer Elektrofluidspeichereinrichtung (22) und einer eine Membran (28) umfassenden galvanischen Zelle (38) zirkuliert und
**dass**, insbesondere verbrauchtes, Elektrofluid (24, 24') über eine Elektrofluidleitung (32) entnommen und in einen anderen Bereich der Triebwerkanordnung (1) zur weiteren Verwendung zugeführt und/oder aus der Triebwerkanordnung ausgestoßen wird.

## Claims

1. Engine assembly (1) for a spacecraft, comprising a drive unit (50) for generating a thrust force, having at least one consumer (13) of electrical energy and having an energy supply device (20) for generating electrical energy, in particular for supplying the at least one consumer (13),
**characterized in that**
the energy supply device (20) has a flow battery assembly (21), electrical energy being able to be generated by means of at least one electrofluid (24, 24') which circulates within an electrofluid circuit (26), which electrofluid circuit has an electrofluid storage device (22) and a galvanic cell (38) comprising a membrane (28), and
**in that** an electrofluid line (32) is provided, by means of which the electrofluid (24, 24') can be removed from the electrofluid circuit (26) of the energy supply device (20) and fed into another region of the engine assembly (1) for further use and/or can be ejected from the engine assembly (1).

2. Engine assembly (1) according to claim 1,
**characterized in that**
the engine assembly (1) has a fuel periphery (10), by means of which at least one fluid, in particular fuel and/or oxidizer, can be fed into the drive unit (50), the fuel periphery (10) having a delivery device (14), in particular an electrical pump mechanism, which can be operated using electrical energy.

3. Engine assembly (1) according to claim 2,
**characterized in that**
the energy supply device (20) is electrically connected to the fuel periphery (10), in particular to the electrical delivery device (14), for electrical energy supply.

4. Engine assembly (1) according to any of the preceding claims,
**characterized in that**
the drive unit (50) comprises a combustion chamber mechanism (51) having a peripheral wall (54) and a nozzle (64).

5. Engine assembly (1) according to claim 4,
**characterized in that**
at least the peripheral wall (54) is formed at least partially from a ceramic composite material.

6. Engine assembly (1) according to any of the preceding claims,
**characterized in that**
the electrofluid (24, 24'), in particular downstream of the galvanic cell (38), can be removed from the electrofluid circuit (26) of the energy supply device (20) by means of the electrofluid line (32) and fed into another region of the engine assembly (1) for cooling purposes and/or, in particular, into the drive unit (50) as relativistic mass.

7. Engine assembly (1) according to any of the preceding claims,
**characterized in that**
the drive unit (50) comprises a cooling system and
**in that** the energy supply device (20), by means of the electrofluid line (32), is in flow connection with the drive unit (50), in particular in flow connection with the cooling system, the, in particular consumed, electrofluid (24, 24') being able to be fed into the drive unit (50) for cooling purposes.

8. Engine assembly (1) according to claim 7,
**characterized in that**
the cooling system has at least one film cooling assembly for film cooling the combustion chamber mechanism (51) and/or the nozzle (64), and
**in that** the electrofluid line (32) is in flow connection with the cooling system in such a way that the electrofluid (24, 24') can be used for film cooling by means of the film cooling assembly.

9. Engine assembly (1) according to either claim 7 or claim 8,
**characterized in that**
the cooling system is designed for transpiration cooling of the combustion chamber mechanism (51), in particular of the peripheral wall (54), and **in that** the electrofluid line (32) is in flow connection with the cooling system in such a way that the electrofluid (24, 24') can be used as a cooling fluid for transpiration cooling.

10. Engine assembly (1) according to any of claims 7 to 9,
**characterized in that**
the cooling system is designed for convective cooling of the drive unit and **in that** the electrofluid line (32) is in flow connection with the cooling system in such a way that the electrofluid can be used as a cooling fluid for convection cooling.

11. Engine assembly (1) according to any of claims 4 to 10,
**characterized in that**
the peripheral wall (54) forms part of the flow battery assembly (21), it being designed, for example, as a hollow body.

12. Engine assembly (1) according to any of the preceding claims,
**characterized in that**
the drive unit (50) is designed to generate thrust by means of electrical energy, the drive unit (50) being coupled to the energy supply device (20) by means of an electrical connection for supplying electrical energy, and/or
**in that** the energy supply device (20) further comprises at least one thermoelectric generator assembly.

13. Method for operating an engine assembly (1), in particular according to any of the preceding claims, in which a drive unit (50) is used to generate a thrust force for propelling an aircraft or spacecraft, at least one consumer (13) being supplied with electrical energy via an energy supply device (20),
**characterized in that**
electrical energy is generated in a flow battery assembly (21) of the energy supply device (20) by means of at least one electrofluid (24, 24') which circulates within an electrofluid circuit (26), which electrofluid circuit has an electrofluid storage device (22) and a galvanic cell (38) comprising a membrane (28), and
**in that**, in particular consumed, electrofluid (24, 24') is removed via an electrofluid line (32) and fed into another region of the engine assembly (1) for further use and/or ejected from the engine assembly.

## Revendications

1. Agencement propulseur (1) pour un véhicule spatial, comportant une unité d'entraînement (50) destinée à générer une force de poussée, comportant au moins un consommateur (13) d'énergie électrique et comportant un dispositif de fourniture d'énergie (20) destiné à générer de l'énergie électrique, en particulier pour alimenter l'au moins un consommateur (13),
**caractérisé en ce**
**que** le dispositif de fourniture d'énergie (20) présente un agencement de batterie à circulation (21), l'énergie électrique pouvant être générée au moyen d'au moins un fluide électrique (24, 24') qui circule à l'intérieur d'un circuit (26) à fluide électrique comportant un dispositif de stockage (22) de fluide électrique et une cellule galvanique (38) comprenant une membrane (28) et
**qu'**il existe une conduite (32) à fluide électrique au moyen de laquelle le fluide électrique (24, 24') peut être prélevé du circuit (26) à fluide électrique du dispositif de fourniture d'énergie (20) et peut être amené dans une autre zone de l'agencement propulseur (1) pour une utilisation ultérieure et/ou peut être expulsé de l'agencement propulseur (1).

2. Agencement propulseur (1) selon la revendication 1,
**caractérisé en ce**
**que** l'agencement propulseur (1) présente une périphérie à carburant (10) au moyen de laquelle au moins un fluide, en particulier du carburant et/ou un oxydant, peut être amené à l'unité d'entraînement (50), la périphérie à carburant (10) présentant un dispositif de transport (14) pouvant être actionné par de l'énergie électrique, en particulier un dispositif de pompe électrique.

3. Agencement propulseur (1) selon la revendication 2,
**caractérisé en ce**
**que** le dispositif de fourniture d'énergie (20) est en connexion électrique avec la périphérie à carburant (10), en particulier avec le dispositif de transport (14) électrique, pour l'alimentation en énergie électrique.

4. Agencement propulseur (1) selon l'une des revendications précédentes,
**caractérisé en ce**
**que** l'unité d'entraînement (50) comprend un dispositif de chambre de combustion (51) comportant une paroi périphérique (54) ainsi qu'une buse (64).

5. Agencement de propulseur (1) selon la revendication 4,
**caractérisé en ce**
**qu'**au moins la paroi périphérique (54) est réalisée au moins partiellement en un matériau composite céramique.

6. Agencement propulseur (1) selon l'une des revendications précédentes,
**caractérisé en ce**
**qu'**au moyen de la conduite (32) à fluide électrique, le fluide électrique (24, 24') peut être prélevé, en particulier en aval de la cellule galvanique (38), du circuit (26) à fluide électrique du dispositif de fourniture d'énergie (20) et peut être amené dans une autre zone de l'agencement propulseur (1) à des fins de refroidissement et/ou, en particulier de l'unité d'entraînement (50), comme masse d'impulsion.

7. Agencement propulseur (1) selon l'une des revendications précédentes,
**caractérisé en ce**
**que** l'unité d'entraînement (50) comprend un système de refroidissement et que le dispositif de fourniture d'énergie (20) est en liaison d'écoulement avec l'unité d'entraînement (50), en particulier le système de refroidissement, au moyen de la conduite (32) à fluide électrique, le fluide électrique (24, 24'), en particulier usagé, pouvant être amené à l'unité d'entraînement (50) à des fins de refroidissement.

8. Agencement propulseur (1) selon la revendication 7,
**caractérisé en ce**
**que** le système de refroidissement présente au moins un agencement de refroidissement par film pour le refroidissement par film du dispositif de chambre de combustion (51) et/ou de la buse (64) et
**que** la conduite (32) à fluide électrique est en liaison d'écoulement avec le système de refroidissement de telle sorte que le fluide électrique (24, 24') peut être utilisé pour le refroidissement par film au moyen du dispositif de refroidissement par film.

9. Agencement propulseur (1) selon la revendication 7 ou 8,
**caractérisé en ce**
**que** le système de refroidissement est réalisé pour le refroidissement par transpiration du dispositif de chambre de combustion (51), en particulier de la paroi périphérique (54), et que la conduite (32) à fluide électrique est en liaison d'écoulement avec le système de refroidissement de telle sorte que le fluide électrique (24, 24') peut être utilisé comme fluide de refroidissement pour le refroidissement par transpiration.

10. Agencement propulseur (1) selon l'une des revendications 7 à 9,
**caractérisé en ce**
**que** le système de refroidissement est conçu pour le refroidissement par convection de l'unité d'entraînement et
**que** la conduite (32) à fluide électrique est en liaison d'écoulement avec le système de refroidissement de telle sorte que le fluide électrique peut être utilisé comme fluide de refroidissement pour le refroidissement par convection.

11. Agencement propulseur (1) selon l'une des revendications 4 à 10,
**caractérisé en ce**
**que** la paroi périphérique (54) forme une partie de l'agencement de batterie à circulation (21), en étant par exemple réalisée sous la forme d'un corps creux.

12. Agencement propulseur (1) selon l'une des revendications précédentes,
**caractérisé en ce**
**que** l'unité d'entraînement (50) est conçue pour générer une poussée au moyen d'énergie électrique, l'unité d'entraînement (50) étant couplée au dispositif de fourniture d'énergie (20) au moyen d'une liaison électrique pour l'alimentation en énergie électrique et/ou
**que** le dispositif de fourniture d'énergie (20) comprend en outre au moins un agencement de générateur thermoélectrique.

13. Procédé d'exploitation d'un agencement propulseur (1), en particulier selon l'une des revendications précédentes, dans lequel une force de poussée est générée avec une unité d'entraînement (50) pour la propulsion d'un aéronef ou d'un véhicule spatial, au moins un consommateur (13) d'énergie électrique étant alimenté en énergie électrique par l'intermédiaire d'un dispositif de fourniture d'énergie (20),
**caractérisé en ce**
**que** l'énergie électrique est produite dans un agencement de batterie à circulation (21) du dispositif de fourniture d'énergie (20) au moyen d'au moins un fluide électrique (24, 24') qui circule à l'intérieur d'un circuit (26) à fluide électrique comportant un dispositif de stockage (22) de fluide électrique et une cellule galvanique (38) comprenant une membrane (28) et
**que** du fluide électrique (24, 24'), en particulier usagé, est prélevé par l'intermédiaire d'une conduite (32) à fluide électrique et est amené dans une autre zone de l'agencement propulseur (1) pour une utilisation ultérieure et/ou est expulsé de l'agencement propulseur.
